# FASCICULE DE BREVET EUROPEEN

(11) **EP 0 599 096 B1**
(45) Date de publication et mention de la délivrance du brevet: **28.05.1997**
(21) Numéro de dépôt: 93117703.4
(22) Date de dépôt: 02.11.1993
(51) Int. Cl.: C08F 36/04, B01J 31/14, C08F 4/54

(54) **Catalyseur de polymérisation de dioléfines, son procédé de préparation et son application à la préparation de polymères**
Katalysator für Diolefinpolymerisation, Verfahren zu ihrer Herstellung und ihre Anwendung für die Herstellung von Polymeren
Catalyst for the polymerisation of diolefines, process for its manufacture and its use in the preparation of polymers

(30) Priorité: 23.11.1992 FR 9214145
(43) Date de publication de la demande: 01.06.1994
(73) Titulaire: COMPAGNIE GENERALE DES ETABLISSEMENTS MICHELIN - MICHELIN & CIE, 63040 Clermont-Ferrand Cédex (FR); ELF ATOCHEM S.A., 92800 Puteaux (FR)
(72) Inventeur: Robert, Pierre, F-63000 Clermont-Ferrand (FR); Spitz, Roger, F-69360 St-Symphorien-d'Ozon (FR)
(74) Mandataire: Hiebel, Robert

(56) Documents cités:
- GB-A- 2 101 616
- GB-A- 2 164 260
- CHEMICAL ABSTRACTS, vol. 99, no. 22, 1983, Columbus, Ohio, US; abstract no. 176435d, 'POLYMERIZATION OF CONJUGATED DIENES'

## Description

La présente invention a pour objet un catalyseur solide supporté susceptible de présenter une activité catalytique élevée, utilisable pour la polymérisation de diènes conjugués, son procédé de fabrication et son application à la préparation de polymères et de copolymères de diènes conjugués.

L'utilisation de lanthanides comme catalyseurs de polymérisation de diènes conjugués est bien connue de l'homme de l'art.

Diverses compositions catalytiques à base de terres rares ont été décrites et en premier lieu avec des halogénures de terres rares. Ainsi dans Sci. Sin. 13 (8), 1339 (1964) a été décrite l'utilisation du trichlorure d'yttrium et dans le brevet belge n° 644 291 celle du trichlorure de cérium. Cependant, en raison de la très faible solubilité de ces sels dans les solvants hydrocarbonés aliphatiques ou aromatiques utilisés comme solvant de polymérisation, ces compositions catalytiques avaient un caractère hétérogène et une faible activité catalytique, ce qui en a fortement limité leur exploitation au niveau industriel.

Pour remédier à cet inconvénient diverses solutions ont été décrites. Ainsi a été décrite l'utilisation de systèmes catalytiques binaires résultant de la réaction d'un composé trialkyle aluminium avec un trihalogénure de terre rare complexé par des donneurs d'électrons. Dans "Journal of Polymer Science - Polymer Chemistry, 19 p. 3345 (1980)" est décrite l'utilisation d'alcool et dans "Macromolecules, 15, p. 230 (1982)" celle de tétrahydrofurane.

Comme autre solution, dans "Kaustschuk und Gummi Kunstoffe 22, p. 293 (1969)", a été décrite l'utilisation de systèmes catalytiques ternaires résultant de la réaction d'un carboxylate de terre rare, particulièrement de néodyme, avec un agent halogénant et un composé de trialkyle aluminium, l'agent halogénant pouvant être un dérivé halogéné d'alkyle aluminium.

Il a par ailleurs été proposé d'utiliser des systèmes catalytiques quaternaires comme dans le brevet européen n° 7027 décrivant un système catalytique provenant de la réaction du produit de réaction d'une base de Lewis et d'un carboxylate d'un métal de la série des lanthanides avec un composé organique de l'aluminium, un halogénure d'alkyle aluminium et un diène conjugué.

Enfin plus récemment, ont été décrits dans "Journal of Macromolecular Science - Chemistry, A 26 (2 § 3) p. 405-416, (1989)" des systèmes catalytiques constitués par des complexes de néodyme supportés sur un copolymère d'acide acrylique avec une oléfine en présence d'un composé organique de l'aluminium et un halogénure d'alkyle aluminium.

La présente invention a pour objet un catalyseur supporté solide, stable dans le temps, susceptible d'avoir une activité élevée et de donner des polymères et des copolymères de diènes conjugués de microstructure désirée sans nécessiter des modes opératoires délicats et/ou compliqués à mettre en oeuvre comme ceux nécessaires avec certains des systèmes catalytiques mentionnés précédemment. Il ne nécessite notamment ni prépolymérisation, ni prétraitement.

En conséquence, la présente invention fournit un catalyseur supporté solide utilisable pour la polymérisation et la copolymérisation de diènes conjugués comprenant des atomes métalliques immobilisés par un support caractérisé en ce qu'il comprend le produit de réaction
A) d'un support solide sous forme de dihalogénure de magnésium,
B) d'un agent gonflant du support,
C) d'au moins un composé métallique choisi parmi les métaux ayant un numéro atomique compris entre 57 et 71 ou 92 dans le tableau périodique des éléments de Mendeleev et si le composé métallique n'est pas sous forme d'halogénure,
D) d'au moins un agent d'halogénation choisi dans le groupe constitué par un composé halogéné de l'aluminium représenté par la formule Xₙ Al R₃₋ₙ dans laquelle X représente les atomes de chlore, brome, iode, fluor, Al représente l'atome d'aluminium, R représente un radical alcoyle ayant de un à quinze atomes de carbone et n représente un nombre ayant une valeur comprise entre 1 et 3 ou un composé halogéné autre qu'un dérivé halogéné de l'aluminium ayant un halogène labile échangeable, le solide de réaction étant exempt de l'agent gonflant résiduel après la réaction, plus
E) un dérivé organique de l'aluminium représenté par la formule Xₘ Al R'₃₋ₘ dans laquelle X représente un halogène, R' représente un atome d'hydrogène ou un radical alcoyle ayant de un à huit atomes de carbone, les trois substituants ne pouvant toutefois pas tous simultanément représenter un atome d'hydrogène, m représente les valeurs 0, 1 ou 2, obligatoirement présent lorsque l'agent d'halogénation ne contient pas d'aluminium et facultativement présent lorsque l'agent d'halogénation contient de l'aluminium.

Le support solide utilisé dans la présente invention est un support dont les plans réticulaires peuvent s'écarter sous l'action d'un agent gonflant. Le support solide utilisé est un dihalogénure de magnésium et à titre préférentiel le dichlorure de magnésium. Le dichlorure de magnésium est de préférence anhydre mais peut contenir une très faible proportion d'humidité.

L'agent gonflant utilisé dans la présente invention doit être susceptible d'écarter les plans réticulaires du support et doit pouvoir être éliminé après réaction avec le support. A ce titre conviennent les éthers et à titre préférentiel le tetrahydrofurane.

Le ou les composés métalliques immobilisés par le support qui est utilisé dans la présente invention est tout composé métallique choisi parmi les métaux ayant un numéro atomique compris entre 57 et 71 ou 92 du tableau périodique des éléments de Mendeleev se présentant sous forme isolée ou sous forme d'un mélange de plusieurs métaux de numéros atomiques différents. A titre préférentiel de composés métalliques conviennent les sels trivalents de cérium, lanthane, du praséodyme, du néodyme, le mélange commercial "didymium", les sels tétravalents de l'uranium et tout particulièrement le trichlorure de néodyme ou un sel trivalent ou tétravalent d'un acide carboxylique ayant de 2 à 12 atomes de carbone ou un sel mixte d'un acide carboxylique ayant de 2 à 12 atomes de carbone dissous en présence de deux acides carboxyliques de poids moléculaires différents l'un ayant de 2 à 12 atomes de carbone et l'autre ayant de 2 à 5 atomes de carbone dans un solvant qui est de préférence le toluène. A titre d'exemple d'acides carboxyliques susceptibles de former un sel métallique on peut citer les acides acétique, butyrique, n-hexanoïque, n-heptanoïque, n-octanoïque, ethyle 2-hexanoïque, versatique.

Le métal peut être présent en quantités variables dans le sel métallique tout en conférant une activité catalytique. Ainsi le métal peut être présent dans le sel métallique dans une fourchette de 1 % à 20 % en poids par rapport au poids du support non gonflé. A titre préférentiel il est présent à raison de 10 % en poids par rapport au poids du support non gonflé.

Lorsque le composé métallique est présent sous forme d'un carboxylate, il est nécessaire d'utiliser un agent d'halogénation pour obtenir un polymère ou un copolymère de diènes conjugués ayant un enchaînement en cis des unités monomères.

L'agent d'halogénation utilisé dans la présente invention peut être choisi dans le groupe constitué par
a) un dérivé halogéné de l'aluminium représenté par la formule Xₙ Al R₃₋ₙ dans laquelle les différents termes ont les significations mentionnées précédemment et dont on peut citer à titre d'exemples préférentiels le chlorure de dimethyle aluminium, le chlorure de diethyle aluminium, le dichlorure de methyle aluminium, le dichlorure d'éthyle aluminium, le sesquichlorure d'aluminium, le trichlorure d'aluminium, l'iodure de diethyle aluminium, le bromure de diethyle aluminium,
b) un halogénure possédant un halogène labile échangeable tels que par exemple les mono ou polyhalogénures d'alkyle, les halogénures vinyliques, les halogénures benzyliques et préférentiellement le chlorure de butyle, le chlorure de tertiobutyle, le chlorure de benzyle, le bromobenzène, l'acide chlorhydrique,
c) un halogénure métallique qui ne soit pas un dérivé de l'aluminium tel que PCl₅, ZnCl2, SnCl4.

Lorsque l'agent d'halogénation n'est pas un dérivé halogéné de l'aluminium, il est nécessaire que le catalyseur comprenne en plus du produit de réaction, un composé organique de l'aluminium représenté par la forme Xₘ Al R'₃₋ₘ dans laquelle les différents termes ont la signification mentionnée précédemment tandis que la présence de ce composé est facultative dans le cas où un composé contenant de l'aluminium et répondant à la formule Xₙ Al R₃₋ₙ est utilisé à titre d'agent d'halogénation. A titre d'exemple de tels composés on peut citer l'hydrure de diethyle aluminium, l'hydrure de diisobutyle aluminium, le triethyle aluminium, le triisobutyle aluminium.

Le catalyseur selon l'invention peut être formé selon deux variantes :
Selon une première variante, on prépare le catalyseur par coprécipitation en opérant la succession d'étapes suivantes :
- dissolution du support dans l'agent gonflant en présence du composé métallique, à la température d'ébullition de l'agent gonflant,
- addition de la solution obtenue dans un solvant hydrocarboné inerte à basse température, c'est-à-dire inférieure à 0°C et préférentiellement égale ou inférieure à - 40°C,
- récupération du solide obtenu par la réaction du support avec le composé métallique,
- lavage du solide avec un solvant hydrocarboné inerte,
- extraction et/ou complexation de l'agent gonflant du solide isolé,
cette élimination de l'agent gonflant peut se faire par un séchage réalisé à la température ambiante puis à une température supérieure à 100°C, plus particulièrement comprise entre 100°C et 150 °C et préférentiellement voisine de 120°C, éventuellement suivi d'un séchage complémentaire avec un agent d'extraction et/ou de complexation de l'agent gonflant de formule Xₙ Al R₃₋ₙ dans laquelle tous les termes ont la même signification que celle donnée précédemment. A titre préférentiel d'agent d'extraction et/ou de complexation de l'agent gonflant, on utilise le chlorure de diethyle aluminium.
- halogénation, comme connu en soi, avec un agent d'halogénation lorsque le sel métallique de départ est un carboxylate métallique,
- lavage, avec un solvant hydrocarboné du solide de réaction halogéné puis séchage,
- addition au solide de réaction séché d'un composé organique d'aluminium de formule Xₘ Al R'₃₋ₘ dans laquelle les termes ont la signification précédemment indiquée lorsque l'agent d'halogénation n'est pas un composé répondant à la formule Xₙ Al R₃₋ₙ dans laquelle les termes ont la signification précédemment donnée, pour constituer le catalyseur actif.

Cette première variante est applicable quelle que soit la nature du sel sous lequel se présente le composé métallique qu'il s'agisse d'un halogénure ou d'un sel d'un acide carboxylique et que ce dernier se présente lui-même sous forme d'un sel simple ou sous forme d'un sel mixte.

Selon une seconde variante, qui est une variante d'exécution préférentielle, on prépare le catalyseur en opérant la succession d'étapes suivantes :
- dissolution du support dans l'agent gonflant à la température d'ébullition de l'agent gonflant,
- addition de la solution obtenue dans un solvant hydrocarboné inerte à basse température, c'est-à-dire inférieure à - 40°C,
- récupération du solide obtenu par la réaction du support avec l'agent gonflant,
- lavage du solide obtenu avec un solvant hydrocarboné inerte,
- récupération du solide puis séchage à température ambiante et obtention d'un support gonflé ayant un rapport molaire support/agent gonflant 1 : 1,5,
- mise en suspension du support gonflé dans un solvant hydrocarboné inerte,
- addition à la suspension d'une solution d'un sel métallique mixte d'un acide carboxylique ayant de 2 à 12 atomes de carbone ayant réagi dans un solvant aromatique à la température d'ébullition dudit solvant avec deux acides carboxyliques de poids moléculaires différents l'un ayant de 2 à 12 atomes de carbone et l'autre ayant de 2 à 5 atomes de carbone,
- chauffage sous agitation à une température inférieure à la température d'ébullition du solvant, du support gonflé et de la solution de carboxylate métallique,
- récupération du solide de réaction,
- extraction et/ou complexation du solide de réaction de l'agent gonflant par séchage à la température ambiante puis à une température supérieure à 100°C et de préférence comprise entre 100°C et 150°C et plus préférentiellement voisine de 120°C,
- récupération du constituant métallique solide supporté ayant un rapport molaire support/agent gonflant 1 : 0,5,
- extraction de l'agent gonflant résiduel et halogénation du constituant métallique avec un agent d'halogénation à base d'aluminium en solution dans un solvant hydrocarboné,
- isolement et séchage à température ambiante du composé réactionnel halogéné solide c'est-à-dire du catalyseur.

A titre préférentiel, l'agent d'extraction et/ou de complexation de l'agent gonflant résiduel et l'agent d'halogénation sont un composé unique répondant à la formule Xₙ Al R₃₋ₙ dans laquelle tous les termes ont la signification déjà donnée précédemment.

Lorsque l'agent l'halogénation est un composé répondant à la formule Xₙ Al R₃₋ₙ , un composé organique de l'aluminium représenté par la forme Xₘ Al R'₃₋ₘ dans laquelle les différents termes ont la signification mentionnée précédemment peut être compris dans le catalyseur tandis que sa présence est indispensable en tant que constituant du catalyseur lorsque le composé d'halogénation ne répond pas à la formule Xₙ Al R₃₋ₙ.

Le catalyseur conforme à la présente invention permet la polymérisation de diènes conjugués et la copolymérisation de diènes conjugués entre eux pour conduire à des homopolymères et copolymères stéréospécifiques en cis. A titre de monomères diéniques polymérisables on peut citer à titre d'exemples le butadiène -1,3, l'isoprène, le 2,3-dimethyle butadiène, le pentadiène-1,3, le méthyle-2-pentadiène-1,3.

La polymérisation réalisée avec le catalyseur conforme à l'invention est effectuée comme connu en soi. De préférence, elle est effectuée en présence d'un solvant hydrocarboné alicyclique, aliphatique ou aromatique inerte conventionnellement utilisé pour la polymérisation en solution de diènes conjugués. A titre préférentiel conviennent les solvants aliphatiques et particulièrement l'heptane et le cyclohexane.

La réaction de polymérisation ou de copolymérisation est effectuée à une température comprise entre 40°C et 120°C, de préférence à une température voisine de 60°C. Les polymères et copolymères obtenus selon ce procédé conforme à l'invention peuvent être greffés, fonctionnalisés ou jumpés comme connu en soit et sont utilisables en tant que composant principal de mélange utilisable pour la fabrication d'articles en caoutchouc et notamment d'enveloppes de pneumatiques.

Les exemples suivants sont donnés à titre d'illustration de l'invention. Dans tous les exemples on opère sous argon et les solvants sont préalablement séchés sur tamis moléculaire de 3A° sous balayage d'argon, les viscosités inhérentes sont établies à 25°C en solution à 1 g/litre dans le toluène.

### Exemple 1

### - Préparation du catalyseur

Cet exemple constitue une forme de réalisation du catalyseur conforme à l'invention, selon la première variante de préparation, à savoir par coprécipitation.

Dans un réacteur, on introduit 100 ml de tétrahydrofurane (THF) puis 3g de chlorure de magnésium anhydre (MgCl₂) et 0,28 g de trichlorure de néodyme (NdCl₃). On chauffe les réactifs à la température d'ébullition du THF jusqu'à ce que le chlorure de magnésium et le trichlorure de néodyme soient totalement dissous. La solution obtenue est alors rapidement transférée dans un tube de Schlenck de 500 ml contenant 300 ml d'heptane refroidi à - 50°C par un bain éthanol/azote liquide. Il se forme un solide qui est récupéré et lavé deux fois par 300 ml d'heptane à la température ambiante.

Après lavage, le solide est séché sous vide dans une première phase à la température ambiante puis à une température de 120°C jusqu'à ce qu'il ait un poids constant. On obtient 4,2 g d'un solide vert. Ce produit composite vert est ensuite mis en suspension dans 20 ml d'une solution molaire de chlorure de diethyle aluminium dans l'heptane et le milieu réactionnel est agité à 60°C pendant 60 minutes.

Le solide qui a pris une couleur bleue est lavé après récupération par simple décantation avec 50 ml d'heptane puis séché sous vide à température ambiante.

On obtient 3 g d'un solide réactionnel bleu qui constitue le catalyseur et qui contient 1,4 % en poids de néodyme mesuré par adsorption atomique.

### Procédé de polymérisation

Dans un réacteur, on introduit une suspension constituée par 300 ml d'heptane, 1,8 ml d'une solution molaire de triisobutyle aluminium et 45 mg du catalyseur obtenu précédemment, puis on dissout dans cette suspension à 15°C 11,5 g de butadiène et l'on porte la température à 60°C pendant 40 minutes après quoi on arrête la polymérisation par l'addition d'un agent stoppeur de polymérisation comme connu en soi (mélange méthanol/acétone) et récupère 0,7 g de polybutadiène ayant la microstructure suivante :
teneur en liaisons cis-1,4 : 98,2 %
teneur en liaisons 1,2 : 0,7 %
teneur en liaisons trans-1,4 : 1,1 %
et une viscosité inhérente de : 4,5 dl/g

### Exemple 2

### Préparation du catalyseur par coprécipitation

On réalise le catalyseur en répétant le mode opératoire de l'exemple 1 à l'exception du trichlorure de néodyme qui est remplacé par 2,8 ml d'une solution 0,74 molaire de tricaproate de néodyme dans du tetrahydrofurane. Le tricaproate de néodyme est préparé par réaction d'une solution aqueuse légèrement acide de Nd Cl₃ avec une solution aqueuse de caproate de sodium à la stoechiométrie ; le produit obtenu est séché sous vide à 50°C puis mis en solution dans le tetrahydrofurane.

### Procédé de polymérisation

On répète le mode opératoire de l'exemple 1 sauf qu'on utilise du tricaproate de néodyme et que la durée de polymérisation est de 90 minutes. Le catalyseur utilisé contient 0,4 % au poids de néodyme. On obtient 0,2 g de polybutadiène ayant une teneur en liaisons cis-1,4 de 98,1 % et une viscosité inhérente de 4,2 dl/g.

### Exemple 3

### Préparation du catalyseur par coprécipitation

On réalise le catalyseur en répétant le mode opératoire de l'exemple 1 à l'exception du trichlorure de néodyme qui est remplacé par 5,95 ml d'une solution 0,35 molaire de tri (ethyle-2-hexanoate) de néodyme dans du toluène.

### Procédé de polymérisation

On répète le mode opératoire de l'exemple 1 sauf qu'on utilise 13,2 mg du catalyseur précédemment préparé qui contient 4,8 % en poids de néodyme et que la polymérisation est arrêtée après 60 minutes.

On obtient 5,2 g de polybutadiène ayant une teneur en liaisons cis-1,4 de 98,1 % et une viscosité inhérente de 3,9 dl/g.

### Exemple 4

Cet exemple constitue une forme d'exécution préférentielle du catalyseur conforme à l'invention, selon la seconde variante dite "d'imprégnation".

### Préparation du catalyseur

A) Préparation du support gonflé avec l'agent gonflant pour obtenir un support MgCl₂ : 1,5 THF.
   Dans un tube de Schlenck, on dissout 2,7 g de chlorure de magnésium dans du THF à la température d'ébullition de ce solvant jusqu'à dissolution complète du MgCl₂. Cette solution est rapidement transférée dans un second tube de Schlenck contenant 300 ml d'heptane refroidi par un bain ethanol/azote liquide à - 30°C. Il se forme un solide qui est lavé deux fois avec 300 ml d'heptane à température ambiante puis récupéré et séché à la température ambiante. On obtient ainsi 5,9 g d'une poudre blanche de MgCl₂ : 1,5 THF.
B) Préparation du sel mixte de néodyme : synthèse de tri(ethyle-2-hexanoate) de néodyme anhydre dissous en présence d'acide ethyle-2-hexanoïque et d'acide acétique dans du toluène.
   Dans un erlenmeyer, on introduit 40 ml d'eau portée à une température de 50°C environ et 1,6 g, soit 40 millimoles, de soude. Après dissolution, on ajoute 6,32 g, soit 44 millimoles, d'acide éthyle-2-hexanoïque et l'on porte la température à 90°C durant le temps nécessaire pour obtenir une dissolution complète. Dans la solution ainsi obtenue on ajoute sous vive agitation, en maintenant la température à 90°C, une solution de trichlorure de néodyme hydraté préalablement obtenue par dissolution de 4,8 g de NdCl₃, 6H₂O, soit 13,3 millimoles de NdCl₃, dans 20 ml d'eau à 90°C au besoin en présence d'acide chlorhydrique de façon à ce que le pH final de la solution de NdCl₃ soit compris entre 1 et 2. Après agitation durant 30 minutes pendant lesquelles le sel de néodyme précipite, la suspension est filtrée et le sel de néodyme recueilli. Ce sel est abondamment lavé à l'eau chaude puis il est séché sous vide à 80°C pendant 48 heures. On obtient ainsi 7,4 g de tri(ethyle-2-hexanoate) de néodyme anhydre.
   Dans 50 ml de toluène anhydre, on met en suspension 8,6 g, soit 15 millimoles, de tri (ethyle-2-hexanoate) de néodyme puis l'on ajoute 2,4 ml, soit 15 millimoles, d'acide éthyle-2-hexanoïque et 0,86 ml, soit 15 millimoles, d'acide acétique. Le milieu est agité au reflux du toluène jusqu'à dissolution complète du tri(ethyle-2-hexanoate) de néodyme. On obtient ainsi une solution de sel mixte de néodyme.
C) Réaction du support avec le sel mixte de néodyme.
   Dans un tube de Schlenck contenant 10 ml d'heptane on ajoute 2,8 g du support MgCl₂ : 1,5 THF et l'on agite la suspension obtenue à laquelle on ajoute 3,0 ml d'une solution du sel mixte de néodyme.
   La température du milieu réactionnel est portée à 80°C durant une heure durant laquelle on continue l'agitation après quoi on isole le solide de réaction qui s'est formé et on le sèche d'abord à la température ambiante jusqu'à ce qu'il soit sec puis en chauffant sous vide à 120°C. On obtient ainsi 1,9 g d'un solide vert supporté sur MgCl₂ : 0,5 THF.
D) Synthèse du catalyseur supporté sur chlorure de magnésium. Le solide de réaction vert supporté est mis à réagir avec 20 ml d'une solution molaire de chlorure de diethyle aluminium dans l'heptane et le milieu réactionnel est agité à 60°C pendant 1 heure après quoi le solide qui a pris une couleur bleue est récupéré, lavé deux fois par simple décantation avec 50 ml d'heptane puis séché sous vide à température ambiante. On obtient ainsi le catalyseur actif qui contient 5,7 % en poids de néodyme.

### Procédé de polymérisation

On répète le mode opératoire de l'exemple 1 sauf qu'on utilise 20,7 mg du catalyseur obtenu précédemment et que la polymérisation est effectuée à 60°C pendant 20 minutes. On isole 6,8 g de polybutadiène ayant une teneur en liaisons cis-1,4 de 98 % et une viscosité inhérente de 4,1 dl/g.

### Exemple 5

Cet exemple témoin a pour but d'illustrer l'importance de la présence d'un agent gonflant susceptible d'écarter les plans réticulaires du support.

### Préparation du système réactionnel

Dans un tube de Schlenck métallique d'un volume de 100 ml et contenant 55 g de billes d'acier de différents diamètres, on introduit 7,9 g de chlorure de magnésium anhydre et 1 g de 1, 2, 4, 5-tétramethyle benzène.

On agite l'ensemble avec un agitateur du type Dangouman à oscillation verticale ayant une course de 6 cm et opérant avec une fréquence de 7 Hertz soit avec une accélération voisine de 60 m/s² pendant 4 heures.

### TEST A :

### Préparation du système réactionnel

Au support obtenu on ajoute 10 ml du sel mixte de néodyme dont la préparation a été décrite à l'exemple 4 sous B. On obtient un solide qui est récupéré puis séché sous vide à la température ambiante. Ce solide séché est ensuite cobroyé pendant 4 heures après quoi il est mis à réagir avec 20 ml de chlorure de diéthyle aluminium selon le mode opératoire décrit à l'exemple 4 pour l'étape D. On récupère le système réactionnel solide.

### Procédé de polymérisation

On répète le mode opératoire de l'exemple 1 sauf qu'on utilise 55 mg du système réactionnel obtenu précédemment et qu'on polymérise durant 1 heure avant de stopper la polymérisation. Au terme de ce délai on n'obtient que quelques traces de polybutadiène.

### TEST B

### Préparation du système réactionnel

On opère la préparation en répétant le mode opératoire utilisé pour le test A à l'exception du sel de néodyme qui est remplacé par 2 g de NdCl₃ anhydre.

### Procède de polymérisation

On répète le mode opératoire de l'exemple 1 sauf qu'on utilise 322,2 mg de système réactionnel obtenu précédemment avec NdCl₃ et qu'on polymérise durant 1 heure avant de stopper la polymérisation. Au terme de ce délai on obtient 1,5 g d'un polymère très majoritairement insoluble dans le milieu de polymérisation se présentant sous forme d'un gel.

### EXEMPLE 6

Cet exemple témoin a pour but d'illustrer l'importance du sel mixte de néodyme utilisé dans la forme d'exécution préférentielle du catalyseur conforme à l'invention.

### Préparation du système réactionnel

Dans un tube de Schlenck contenant 10 ml d'heptane on ajoute 2,9 g du support MgCl₂ : 1,5 THF puis l'on agite la suspension obtenue à laquelle on ajoute 0,66 ml d'une solution 0,35 molaire de tri(ethyle-2-hexanoate) de néodyme dans du toluène et l'on opère selon le mode opératoire décrit dans l'exemple 4 pour les étapes C et D.

### Procédé de polymérisation

On répète le mode opératoire de l'exemple 1 sauf qu'on utilise 33,1 mg du solide réactionnel obtenu précédement avec le tri(ethyle-2-hexanoate de néodyme) et qu'on polymérise durant 175 minutes. On obtient 1,5 g d'un polybutadiène à teneur élevée en liaisons cis, soit un rendement beaucoup plus faible qu'avec le sel mixte de néodyme utilisé dans l'exemple 4.

### EXEMPLE 7

Cet exemple a pour but d'illustrer l'importance de la variation des rapports molaires de chacun des deux acides carboxyliques de poids moléculaires différents utilisés pour préparer le sel mixte de néodyme.

### Préparation du catalyseur

On réalise trois essais selon les conditions décrites dans l'exemple 4 avec 3 solutions de sel mixte de néodyme dont les concentrations exprimées en mole/litre et les teneurs en poids en néodyme des catalyseurs sont consignées dans le tableau 1 :

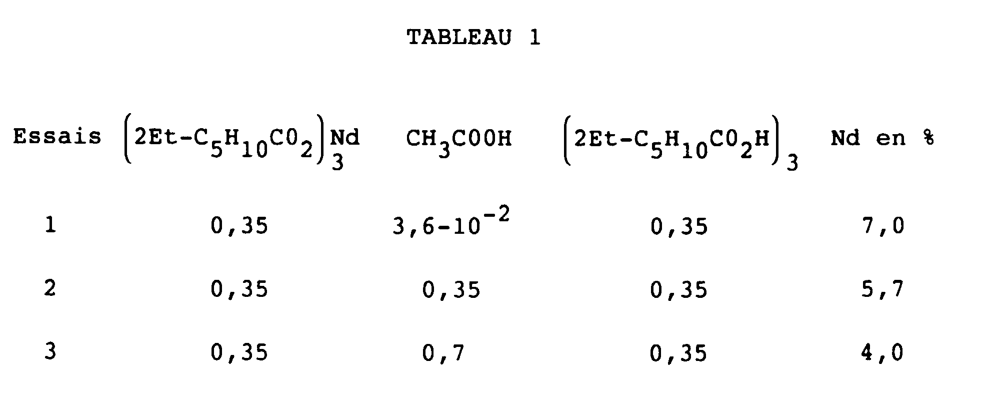

Dans le cas de la solution réalisée pour effectuer l'essai n° 3, on observe la formation d'un précipité qui n'est pas utilisé ; c'est le surnageant qui est utilisé pour la réaction d'halogénation et d'extraction et/ou de complexation de l'agent gonflant.

### Procédé de polymérisation

On répète le mode opératoire de l'exemple 4 avec les 3 solutions de catalyseur précédemment préparées sauf que la masse de catalyseur utilisée, la durée de la polymérisation sont celles indiquées dans le tableau 2 qui montre également la quantité de polybutadiène obtenue avec ces 3 solutions catalytiques et celle de l'essai témoin réalisé avec le tri(éthyle-2-hexanoate) de néodyme.

**TABLEAU 2**

| Essais | masse de catalyseur en mg | Durée en minutes | Quantité de polybutadiène |
|---|---|---|---|
| 1 | 31,3 | 25 | 4,9 g |
| 2 | 20,7 | 20 | 6,8 g |
| 3 | 56,3 | 50 | 4 g |
| T | 33,1 | 175 | 1,5 g |

On constate qu'il y a avantage à utiliser une solution d'octoate de néodyme dans laquelle le rapport molaire des deux acides carboxyliques de poids moléculaires différents est voisin de 1.

### EXEMPLE 8

Cet exemple illustre une variante d'exécution d'un autre sel mixte de néodyme utilisable dans la forme d'exécution préférentielle du catalyseur conforme à l'invention.

### Préparation du catalyseur

On répète le mode opératoire de l'exemple 4 sauf qu'on utilise de l'acide butyrique à la place de l'acide acétique et qu'on utilise les quantités suivantes de réactifs :
tri(ethyle-2-hexanoate) de néodyme sous forme d'une solution 0,35 molaire d'octanoate de néodyme dans du toluène : 5 ml
acide ethyle-2-hexanoïque : 0,32 ml
acide butyrique : 0,3 ml.
Le catalyseur obtenu contient 6,3 % en poids de néodyme.

### Procédé de polymérisation

On répète le mode opératoire de l'exemple 1 sauf que l'on utilise 22 mg du catalyseur préparé précédemment et qu'on polymérise pendant 15 minutes. A l'issue de la réaction de polymérisation on obtient 3,6 g de polybutadiène.

### EXEMPLE 9

Cet exemple illustre une variante d'exécution d'un catalyseur conforme à l'invention dans lequel le métal est le cérium.

### Préparation du catalyseur

Dans cet exemple on reproduit le mode opératoire de l'exemple 4 sauf que l'on utilise du cérium à la place de néodyme et qu'on utilise 9 ml du sel mixte de cérium obtenu de façon analogue au sel mixte de néodyme. La solution de tri (éthyle-2-hexanoate) de cérium utilisée possède une concentration en cérium de 0,1 mole/litre et celle des deux acides acétique et éthyle-2-hexanoïque est également de 0,1 mole/litre. Le catalyseur obtenu contient 4,8 % en poids de cérium.

### Procédé de polymérisation

On répète le mode opératoire de l'exemple 1 sauf que l'on utilise 94,5 mg du catalyseur précédemment préparé et qu'on arrête la polymérisation après 20 minutes. On obtient 2,8 g de polybutadiène.

### EXEMPLE 10

Cet exemple illustre un catalyseur conforme à l'invention dans lequel le métal est l'uranium.

### Préparation du catalyseur

Dans cet exemple on reproduit le mode opératoire de l'exemple 4 sauf que l'on utilise de l'uraniumm à la place du néodyme et qu'on utilise 9,5 ml du sel mixte d'uranium obtenu de façon analogue au sel mixte de néodyme. Le catalyseur obtenu contient 3,3 % en poids d'Uranium.

### Procède de polymérisation

On répète le mode opératoire, de l'exemple 1 sauf qu'on utilise 98,1 mg du catalyseur précédemment préparé à la place du sel mixte de néodyme et qu'on arrête la polymérisation après 55 minutes. On obtient 5 g de polybutadiène.

## Revendications

1. Catalyseur supporté comprenant des atomes métalliques portés par le support caractérisé en ce qu'il comprend le produit de réaction de
A) un support solide sous forme de dihalogénure de magnésium,
B) un agent gonflant du support,
C) au moins un composé métallique de terres rares choisi parmi les métaux ayant un numéro atomique compris entre 57 et 71 ou 92 dans le tableau périodique des éléments de Mendeleev, et si le composé métallique n'est pas un halogénure,
D) un agent d'halogénation choisi dans le groupe constitué par les composés halogénés de l'aluminium représentés par la formule XₙAl R₃₋ₙ dans laquelle X représente les atomes de chlore, brome, iode, fluor, Al représente l'aluminium, R un radical alcoyle ayant de un à quinze atomes de carbone et n un nombre ayant une valeur comprise entre 1 et 3 et les composés halogénés, ayant un halogène labile échangeable, autres que les dérivés halogénés de l'aluminium,
le solide de réaction étant exempt de l'agent gonflant résiduel du support, plus
E) au moins un dérivé organique de l'aluminium représenté par la formule XₘAl(R')₃₋ₘ dans laquelle X représente un atome d'halogène, Al représente l'aluminium, R' un atome d'hydrogène ou un radical alcoyle ayant de un à huit atomes de carbone, les trois substituants R' représentés ne pouvant toutefois pas tous simultanément représenter un atome d'hydrogène, m représente les valeurs 0,1 et 2, obligatoirement présent lorsque l'agent d'halogénation éventuellement utilisé est un composé halogéné ne contenant pas d'aluminium et facultativement présent lorsque l'agent d'halogénation contient de l'aluminium.

2. Catalyseur selon la revendication 1, caractérisé en ce que le dihalogénure de magnésium constituant le support est le dichlorure de magnésium.

3. Catalyseur selon la revendication 1, caractérisé en ce que l'agent gonflant du support est un éther.

4. Catalyseur selon la revendication 3, caractérisé en ce que l'éther est le tétrahydrofurane.

5. Catalyseur selon l'une quelconque des revendications 1 à 4, caractérisé en ce que le composé métallique de terres rares est choisi parmi le groupe constitué par les halogénures et les sels d'un acide carboxylique ayant 2 à 12 atomes de carbone.

6. Catalyseur selon la revendication 5, caractérisé en ce que le sel d'acide carboxylique est dissous dans un solvant aromatique en présence de deux acides carboxyliques de poids moléculaires différents, l'un ayant de 2 à 12 atomes de carbone et l'autre ayant de 2 à 5 atomes de carbone.

7. Catalyseur selon la revendication 6, caractérisé en ce que les deux acides carboxyliques de poids moléculaires différents sont l'acide éthyle-2-hexanoïque et l'acide acétique.

8. Catalyseur selon l'une quelconque des revendications 1 à 7, caractérisé en ce que le métal est le néodyme.

9. Procédé de préparation d'un catalyseur supporté comprenant des atomes métalliques immobilisés par le support caractérisé en ce qu'on opère par coprécipitation en opérant la succession d'étapes suivantes :
- on dissout un support à base de dihalogénure de magnésium dans un agent gonflant dudit support en présence d'au moins un composé métallique ayant un numéro atomique compris entre 57 et 71 ou 92 dans le tableau périodique des éléments de Mendéleev,
- on ajoute la solution obtenue dans un solvant hydrocarboné inerte maintenu à une température inférieure à 0°C,
- on récupère le solide de précipitation résultant de la réaction du support avec le composé métallique,
- on lave le solide de précipitation avec un solvant hydrocarboné inerte,
- on élimine du solide isolé l'agent gonflant du support par un séchage éventuellement suivi d'un traitement avec un agent d'extraction et/ou de complexation de l'agent gonflant,
- on récupère le catalyseur lorsque le composé métallique de départ est un halogénure,
- lorsque le composé métallique de départ ne se présente pas sous forme d'un halogénure on soumet le solide réactionnel exempt d'agent gonflant à une halogénation,
- on lave avec un solvant hydrocarboné puis sèche le solide réactionnel halogéné,
- on ajoute au moins un composé organique de l'aluminium répondant à la formule XₘAl(R')ₘ dans laquelle les termes ont la signification précédemement indiquée,
- après lavage avec un solvant hydrocarboné inerte et séchage, on récupère le catalyseur solide.

10. Procédé selon la revendication 9, caractérisé en ce que le support du composé métallique est le chlorure de magnésium, l'agent gonflant est le tétrahydrofurane.

11. Procédé selon la revendication 10, caractérisé en ce que le composé métallique est choisi dans le groupe constitué par un halogénure, un sel simple d'un acide carboxylique ayant de 2 à 12 atomes de carbone ou un sel mixte d'un acide carboxylique ayant de 2 à 12 atomes de carbone dissous dans un solvant aromatique en présence de deux acides carboxyliques de poids moléculaires différents, l'un ayant de 2 à 12 atomes de carbone et l'autre ayant de 2 à 5 atomes de carbone.

12. Procédé de préparation d'un catalyseur supporté comprenant des atomes métalliques immobilisés par le support caractérisé en ce que
A) on dissout un support à base de dihalogénure de magnésium avec un agent gonflant dudit support.
B) on prépare un sel mixte issu de la réaction d'au moins un composé métallique de terres rares ayant un numéro atomique compris entre 57 et 71 ou 92 avec un acide carboxylique ayant de 2 à 12 atomes de carbone dissous dans un solvant aromatique à la température d'ébullition dudit solvant en présence de deux acides carboxyliques de poids moléculaires différents, l'un ayant de 2 à 12 atomes de carbone et l'autre ayant de 2 à 5 atomes de carbone,
C) on fait réagir dans un solvant hydrocarboné inerte, le support gonflé issu de l'étape A avec le sel mixte de l'étape B et récupère le solide de réaction,
D) on extrait partiellement du solide de réaction l'agent gonflant par un séchage jusqu'à ce que le rapport molaire support/agent gonflant soit égal à 1 : 0,5,
E) on procède à l'extraction de l'agent gonflant résiduel et à l'halogénation du solide de réaction en présence d'un solvant hydrocarboné inerte,
F) on isole le composé réactionnel halogéné solide, on le lave avec un solvant hydrocarboné puis on le sèche,
G) on utilise obligatoirement un composé organique de l'aluminium en association avec le composé réactionnel halogéné lorsque l'agent d'halogénation utilisé dans l'étape E n'est pas un composé organique halogéné de l'aluminium et facultativement lorsque l'agent d'halogénation utilisé est un composé organique halogéné de l'aluminium.

13. Procédé selon la revendication 12, caractérisé en ce que le dihalogénure de magnésium est le chlorure de magnésium, l'agent gonflant est le tétrahydrofurane, l'agent d'élimination de l'agent gonflant et l'agent d'halogénation sont un composé unique répondant à la formule Xₙ Al R₃₋ₙ dans laquelle tous les termes ont la signification précédemment donnée.

14. Procédé selon l'une des revendications 12 ou 13, caractérisé en ce que le sel mixte est le tri(éthyle-2-hexanoate) de néodyme dissous dans du toluène en présence d'acide éthyle-2-hexanoïque et d'acide acétique.

15. Procédé de polymérisation de polymères de diènes conjugués et de copolymérisation de diènes conjugués entre eux, caractérisé en ce qu'on polymérise au moins un diène conjugué dans un solvant hydrocarboné à l'aide d'un catalyseur organo-métallique caractérisé en ce qu'il qu'il comprend le produit de réaction de
A) un support solide sous forme de dihalogénure de magnésium,
B) un agent gonflant du support,
C) un composé d'au moins un composé métallique choisi parmi les métaux ayant un numéro atomique compris entre 57 et 71 ou 92 dans le tableau périodique des éléments de Mendeleev, et si le composé métallique n'est pas un halogénure,
D) un agent d'halogénation choisi dans le groupe constitué par les composés halogénés de l'aluminium représentés par la formule XₙAl R₃₋ₙ dans laquelle X représente les atomes de chlore, brome, iode, fluor, Al représente l'aluminium, R un radical alcoyle ayant de un à quinze atomes de carbone et n un nombre ayant une valeur comprise entre 1 et 3 et les composés halogénés autres que les dérivés halogénés de l'aluminium, exempt de l'agent gonflant du support, plus
E) au moins un dérivé organique de l'aluminium représenté par la formule XₘAl(R')₃₋ₘ dans laquelle X représente un atome d'halogène, Al représente l'aluminium, R' un atome d'hydrogène ou un radical alcoyle ayant de un à huit atomes de carbone, les trois substituants R' représentés ne pouvant toutefois pas tous simultanément représenter un atome d'hydrogène, m représente les valeurs 0,1 et 2, obligatoirement présent lorsque l'agent d'halogénation éventuellement utilisé est un composé halogéné ne contenant pas d'aluminium et facultativement présent lorsque l'agent d'halogénation contient de l'aluminium.

16. Procédé selon la revendication 15, caractérisé en ce que le dihalogénure de magnésium est le chlorure de magnésium, l'agent gonflant est le tétrahydrofurane, l'agent d'élimination de l'agent gonflant et l'agent d'halogénation sont un composé unique répondant à la formule Xₙ Al R₃₋ₙ dans laquelle tous les termes ont la signification précédemment donnée.

17. Procédé selon l'une des revendications 15 ou 16, caractérisé en ce que le sel mixte est le tri(éthyle-2-hexanoate) de néodyme dissous dans du toluène en présence d'acide éthyle-2-hexanoïque et d'acide acétique.

## Patentansprüche

1. Katalysator auf einem Trägermaterial, der Metallatome, die von dem Trägermaterial getragen werden, enthält, dadurch gekennzeichnet, daß
er das Reaktionsprodukt
A) eines festen Trägerstoffes in Form von Magnesiumdihalogenid,
B) eines Quellungsmittels des Trägerstoffes,
C) mindestens einer Metallverbindung von Seltenerdmetallen, die unten den Metallen mit der Ordnungszahl im Bereich von 57 bis 71 oder 92 des Periodensystems der Elemente ausgewählt ist, und, falls die Metallverbindung kein Halogenid ist,
D) eines Halogenierungsmittels, das unter den Halogenverbindungen von Aluminium, die durch die Formel Xₙ Al R₃₋ₙ dargestellt werdem, worin X die Atome Chlor, Brom, Iod und Fluor, Al das Aluminiumatom, R eine Alkoylgruppe mit einem bis fünfzehn Kohlenstoffatomen und n eine Zahl im Bereich von 1 bis 3 bedeutet, und Halogenverbindungen ausgewählt ist, die ein austauschbares schwachgebundenes Halogenatom aufweisen und die keine Halogenderivate von Aluminium sind,
wobei der Feststoff der Reaktion frei von restlichen Quellungsmitteln des Trägerstoffs ist, und ferner
E) mindestens ein organisches Aluminiumderivat enthält, das durch die Formel Xₘ Al (R')₃₋ₘ dargestellt wird, worin X ein Halogenatom, Al das Aluminiumatom, R' Wasserstoff oder eine Alkoylgruppe mit einem bis 8 Kohlenstoffatomen, wobei die drei Substituenten R' jedoch nicht gleichzeitig Wasserstoff bedeuten können, und m die Werte 0, 1 und 2 bedeutet, wobei das Derivat obligatorisch vorliegt, wenn das ggf. verwendete Halogenierungsmittel eine Halogenverbindung ist, die kein Aluminium enthält, und fakultativ verwendet wird, wenn das Halogenierungsmittel Aluminium enthält.

2. Katalysator nach Anspruch 1, dadurch gekennzeichnet, daß das Magnesiumdihalogenid, das den Trägerstoff bildet, das Magnesiumdichlorid ist.

3. Katalysator nach Anspruch 1, dadurch gekennzeichnet, daß das Quellungsmittel des Trägerstoffs ein Ether ist.

4. Katalysator nach Anspruch 3, dadurch gekennzeichnet, daß der Ether das Tetryhydrofuran ist.

5. Katalysator nach einem der Ansprüche 1 bis 4, dadurch gekennzeichnet, daß die Metallverbindung von Seltenerdmetallen unter den Halogeniden und den Salzen einer Carbonsäure mit 2 bis 12 Kohlenstoffatomen ausgewählt ist.

6. Katalysator nach Anspruch 5, dadurch gekennzeichnet, daß das Salz einer Carbonsäure in einem aromatischen Lösungsmittel in Gegenwart von 2 Carbonsäuren mit unterschiedlichen Molekulargewichten gelöst wird, wobei eine Carbonsäure 2 bis 12 Kohlenstoffatome und die andere 2 bis 5 Kohlenstoffatome aufweist.

7. Katalysator nach Anspruch 6, dadurch gekennzeichnet, daß die beiden Carbonsäuren von unterschiedlichem Molekulargewicht, die 2-Ethylhexansäure und die Essigsäure sind.

8. Katalysator nach einem der Ansprüche 1 bis 7, dadurch gekennzeichnet, daß das Metall Neodym ist.

9. Verfahren zur Herstellung eines Katalysators auf einem Trägerstoff, der auf dem Trägerstoff immobilisierte Metallatome enthält, dadurch gekennzeichnet, daß eine Copräzipitation durchgeführt wird, wobei die folgenden Schritte nacheinander durchgeführt werden:
- Lösen eines Trägerstoffes auf der Basis von Magnesiumdihalogenid in einem Quellungsmittel des Trägerstoffs in Gegenwart mindestens einer Metallverbindung mit einer Ordnungszahl im Bereich von 57 bis 71 oder 92 des Periodensystems der Elemente,
- Zusatz der erhaltenen Lösung in ein inertes Kohlenwasserstoff-Lösungsmittel, das bei einer Temperatur unter 0 °C gehalten wird,
- Wiedergewinnung des Feststoffs aus der Präzipitation, der aus der Reaktion des Trägerstoffs mit der Metalll verbindung resultiert
- Waschen des Feststoffs der Präzipitation mit einem inerten Kohlenwasserstoff-Lösungsmittel,
- Entfernen des Quellungsmittels des Trägerstoffes vom abgetrennten Feststoff durch Trocknen und ggf. durch anschließende Behandlung mit einem Extraktions-und/oder Komplexierungsmittel des Quellungsmittels,
- Wiedergewinnung des Katalysators, wenn die am Anfang eingesetzte Metallverbindung ein Halogenid ist,
- wenn die am Anfang eingesetzte Metallverbindung nicht in Form eines Halogenids vorliegt, Halogenierung des umgesetzten Feststoffs, der frei von Quellungsmittel ist,
- Waschen mit einem Kohlenwasserstoff-Lösungsmittel und anschließend Trocknen des umgesetzten halogenierten Feststoffs,
- Zusatz mindestens einer organischen Aluminiumverbindung, die der Formel Xₘ Al (R')ₘ entspricht, worin die Buchstaben die oben angegebene Bedeutung aufweisen, und
- nach Waschen mit einem inerten Kohlenwasserstoff-Lösungsmittel und Trocknen, Wiedergewinnung des festen Katalysators.

10. Verfahren nach Anspruch 9, dadurch gekennzeichnet, daß der Trägerstoff der Metallverbindung das Magnesiumchlorid und das Quellungsmittel Tetrahydrofuran ist.

11. Verfahren nach Anspruch 10, dadurch gekennzeichnet, daß die Metallverbindung unter einem Halogenid, einem einfachen Salz einer Carbonsäure mit 2 bis 12 Kohlenstoffatomen oder einem gemischten Salz einer Carbonsäure mit 2 bis 12 Kohlenstoffatomen, das in einem aromatischen Lösungsmittel in Gegenwart von 2 Carbonsäuren unterschiedlichen Molekulargewichts gelöst wurde, wobei eine Carbonsäure 2 bis 12 Kohlenstoffatome und die andere 2 bis 5 Kohlenstoffatome aufweist, ausgewählt ist.

12. Verfahren zur Herstellung eines Katalysators auf einem Trägerstoff, der auf dem Trägerstoff immobilisierte Metallatome enthält, gekennzeichnet durch folgende Schritte:
A) Lösen eines Trägerstoffes auf der Basis von Magnesiumdihalogenid in einem Quellungsmittel dieses Trägerstoffes,
B) Herstellung eines gemischten Salzes, das aus der Umsetzung mindestens einer Metallverbindung von Seltenerdmetallen mit einer Ordnungszahl im Bereich von 57 bis 71 oder 92 und einer Carbonsäure mit 2 bis 12 Kohlenstoffatomen stammt, die in einem aromatischen Lösungsmittel bei der Siedetemperatur des Lösungsmittels in Gegenwart von 2 Carbonsäuren mit unterschiedlichen Molekulargewichten gelöst wurde, wobei eine Carbonsäure 2 bis 12 Kohlenstoffatome und die andere 2 bis 5 Kohlenstoffatome aufweist,
C) Umsetzung des gequollenen Trägerstoffes aus Schritt A mit dem gemischten Salz aus Schritt B in einem inerten Kohlenwasserstoff-Lösungsmittel und Wiedergewinnung des umgesetzten Feststoffs,
D) partielle Extraktion des Quellungsmittels vom umgesetzten Feststoff durch Trocknen bis zu einem Molverhältnis Trägerstoff/Quellungsmittel von 1 : 0,5,
E) Extraktion des restlichen Quellungsmittels und Halogenierung des umgesetzten Feststoffs in Gegenwart eines inerten Kohlenwasserstoff-Lösungsmittels,
F) Abtrennung der festen halogenierten umgesetzten Verbindung, Waschen mit einem Kohlenwasserstoff-Lösungsmittel und anschließendes Trocknen,
G) obligatorische Verwendung einer organischen Aluminiumverbindung in Kombination mit der umgesetzten halogenierten Verbindung, wenn das in Schritt E verwendete Halogenierungsmittel keine organische Halogenverbindung von Aluminium ist, und fakultative Verwendung dieser Verbindung, wenn als Halogenierungsmittel eine organische Halogenverbindung von Aluminium verwendet wird.

13. Verfahren nach Anspruch 12, dadurch gekennzeichnet, daß das Magnesiumdihalogenid das Magnesiumdichlorid und das Quellungsmittel das Tetrahydrofuran ist, und das Mittel zur Eliminierung des Quellungsmittels und das Mittel zur Halogenierung eine einzige Verbindung sind, die der Formel Xₙ Al R₃₋ₙ entspricht, worin alle Buchstaben die oben angegebenen Bedeutungen aufweisen.

14. Verfahren nach einem der Ansprüche 12 oder 13, dadurch gekennzeichnet, daß das gemischte Salz das Neodymtris(2-ethylhexanoat) ist, das in Toluol in Gegenwart von 2-Ethylhexansäure und Essigsäure gelöst wurde.

15. Verfahren zur Polymerisation von Polymeren von konjugierten Dienen und zur Copolymerisation von unterschiedlichen konjugierten Dienen, dadurch gekennzeichnet, daß mindestens ein konjugiertes Dien in einem Kohlenwasserstoff-Lösungsmittel mit einem organo-metallischen Katalysator polymerisiert wird, und dadurch gekennzeichnet, daß der Katalysator das Reaktionsprodukt
A) eines festen Trägerstoffs in Form von Magnesiumdihalogenid,
B) eines Quellungsmittels des Trägerstoffs,
C) mindestens einer Metallverbindung, die unter den Metallen mit einer Ordnungszahl im Bereich von 57 bis 71 oder 92 des Periodensystems der Elemente ausgewählt ist, und falls die Metallverbindung kein Halogenid ist,
D) eines Halogenierungsmittels, das unter den Halogenverbindungen von Aluminium, die durch die Formel Xₙ Al R₃₋ₙ dargestellt werden, worin X die Atome Chlor, Brom, Iod und Fluor, Al das Aluminiumatom, R eine Alkoylgruppe mit 1 bis 5 Kohlenstoffatomen und n eine Zahl im Bereich von 1 bis 3 bedeutet, und den halogenierten Verbindungen ausgewählt, die keine Halogenderivate von Aluminium sind, wobei das Halogenierungsmittel frei von dem Quellungsmittel des Trägerstoffs ist, und ferner
E) mindestens ein organisches Aluminiumderivat enthält, das durch die Formel Xₘ Al (R')₃₋ₘ dargestellt wird, worin X ein Halogenatom, Al das Aluminiumatom, R' ein Wasserstoffatom oder eine Alkoylgruppe mit 1 bis 8 Kohlenstoffatomen, wobei die drei Substituenten R' jedoch nicht gleichzeitig ein Wasserstoffatom bedeuten können, und m 0, 1 oder 2 bedeutet, welches obligatorisch vorliegt, wenn das ggf. verwendete Halogenierungsmittel eine Halogenverbindung ist, die kein Aluminium enthält, und fakultativ vorliegt, wenn das Halogenierungsmittel Aluminium enthäit.

16. Verfahren nach Anspruch 15, dadurch gekennzeichnet, daß das Magnesiumdihalogenid das Magnesiumchlorid und das Quellungsmittel das Tetrahydrofuran ist, und das Mittel zur Eliminierung des Quellungsmittels und das Halogenierungsmittels eine einzige Verbindung sind, die der Formel Xₙ Al R₃₋ₙ entspricht, worin alle Buchstaben die oben angegebenen Bedeutungen aufweisen.

17. Verfahren nach einem der Ansprüche 15 oder 16, dadurch gekennzeichnet, daß das gemischte Salz das Neodymtris(2-ethylhexanoat) ist, das in Toluol in Gegenwart von 2-Ethylhexansäure und Essigsäure gelöst wurde.

## Claims

1. A supported catalyst comprising metal atoms borne by the support, characterised in that it comprises the reaction product of
A) a solid support in the form of magnesium dihalide,
B) a swelling agent of the support,
C) at least one rare earth metal compound selected from among the metals having an atomic number of between 57 and 71 or 92 in Mendeleev's periodic table of the elements, and if the metal compound is not a halide,
D) a halogenation agent selected from the group formed by halogenated compounds of aluminium represented by the formula XₙAlR₃₋ₙ in which X represents chlorine, bromine, iodine or fluorine atoms, Al represents aluminium, R represents an alkyl radical having one to fifteen carbon atoms, and n represents a number having a value of between 1 and 3 and the halogenated compounds having an exchangeable labile halogen, other than the halogen derivatives of aluminium, the reaction solid being free from the residual swelling agent of the support, plus
E) at least one organic derivative of aluminium represented by the formula XₘAl(R')₃₋ₘ in which X represents a halogen atom, Al represents aluminium, R' a hydrogen atom or an alkyl radical having from one to eight carbon atoms, the three substituents R' represented, however, not all being able simultaneously to represent a hydrogen atom, m represents the values 0, 1 and 2, necessarily present when the halogenation agent possibly used is a halogen compound not containing aluminium and optionally present when the halogenation agent contains aluminium.

2. A catalyst according to Claim 1, characterised in that the magnesium dihalide constituting the support is magnesium dichloride.

3. A catalyst according to Claim 1, characterised in that the swelling agent of the support is an ether.

4. A catalyst according to Claim 3, characterised in that the ether is tetrahydrofuran.

5. A catalyst according to any one of Claims 1 to 4, characterised in that the rare earth metal compound is selected from the group consisting of the halides and salts of a carboxylic acid having 2 to 12 carbon atoms.

6. A catalyst according to Claim 5, characterised in that the carboxylic acid salt is dissolved in an aromatic solvent in the presence of two carboxylic acids of different molecular weight, one having from 2 to 12 carbon atoms and the other having from 2 to 5 carbon atoms.

7. A catalyst according to Claim 6, characterised in that the two carboxylic acids of different molecular weight are ethyl-2-hexanoic acid and acetic acid.

8. A catalyst according to any one of Claims 1 to 7, characterised in that the metal is neodymium.

9. A method of preparing a supported catalyst comprising metal atoms immobilised by the support, characterised in that one operates by coprecipitation, carrying out the following steps in succession:
- a support having a base of magnesium dihalide is dissolved in a swelling agent for said support in the presence of at least one metal compound having an atomic number of between 57 and 71 or 92 in Mendeleev's periodic table of the elements,
- the solution obtained is added to an inert hydrocarbon solvent kept at a temperature below 0°C,
- the precipitation solid resulting from the reaction of the support with the metal compound is recovered,
- the precipitation solid is washed with an inert hydrocarbon solvent,
- the swelling agent of the support is eliminated from the isolated solid by drying, possibly followed by a treatment with an agent for the extracting and/or complexing of the swelling agent,
- the catalyst is recovered when the initial metal compound is a halide,
- when the initial metal compound is not in the form of a halide, the reaction solid free of swelling agent is subjected to halogenation,
- the halogenated reaction solid is washed with a hydrocarbon solvent and then dried,
- at least one organic compound of aluminium having the formula XₘAl(R')ₘ in which the terms have the meaning previously indicated is added,
- after washing with an inert hydrocarbon solvent and drying, the solid catalyst is recovered.

10. A method according to Claim 9, characterised in that the support of the metal compound is magnesium chloride and the swelling agent is tetrahydrofuran.

11. A method according to Claim 10, characterised in that the metal compound is selected from the group consisting of a halide, a simple salt of a carboxylic acid having 2 to 12 carbon atoms or a mixed salt of a carboxylic acid having 2 to 12 carbon atoms dissolved in an aromatic solvent in the presence of two carboxylic acids of different molecular weight, one having 2 to 12 carbon atoms and the other having 2 to 5 carbon atoms.

12. A method of preparing a supported catalyst comprising metal atoms immobilised by the support, characterised in that
A) a support having a base of magnesium dihalide is dissolved with a swelling agent of said support;
B) a mixed salt is prepared coming from the reaction of at least one rare earth metal compound having an atomic number of between 57 and 71 or 92 with a carboxylic acid having from 2 to 12 carbon atoms dissolved in an aromatic solvent at the boiling point of said solvent in the presence of two carboxylic acids of different molecular weights, one having from 2 to 12 carbon atoms and the other having from 2 to 5 carbon atoms;
C) the swollen support coming from step A is reacted in an inert hydrocarbon solvent with the mixed salt of step B and the reaction solid is recovered;
D) the swelling agent is partially extracted from the reaction solid by drying until the molar ratio of support to swelling agent is equal to 1 : 0.5;
E) the residual swelling agent is extracted and the reaction solid is halogenated in the presence of an inert hydrocarbon solvent;
F) the solid halogenated reaction compound is isolated, washed with a hydrocarbon solvent and then dried;
G) an organic compound of aluminium in association with the halogenated reaction compound is necessarily used when the halogenation agent used in step E is not a halogenated organic compound of aluminium, and optionally used when the halogenation agent used is a halogenated organic compound of aluminium.

13. A method according to Claim 12, characterised in that the magnesium dihalide is magnesium chloride, the swelling agent is tetrahydrofuran, the agent for the elimination of the swelling agent and the halogenation agent are a single compound having the formula XₙAlR₃₋ₙ in which all the terms have the meaning previously indicated.

14. A method according to one of Claims 12 or 13, characterised in that the mixed salt is neodymium tri(ethyl-2-hexanoate) dissolved in toluene in the presence of ethyl-2-hexanoic acid and acetic acid.

15. A method of polymerising polymers of conjugated dienes and copolymerising conjugated dienes with each other, characterised in that at least one conjugated diene is polymerised in a hydrocarbon solvent by means of an organ-metallic catalyst, characterised in that it comprises the reaction product of
A) a solid support in the form of magnesium dihalide,
B) a swelling agent for the support,
C) a compound of at least one metal compound selected from among the metals having an atomic number of between 57 and 71 or 92 in Mendeleev's periodic table of the elements and, if the metal compound is not a halide,
D) a halogenation agent selected from the group formed by halogenated compounds of aluminium represented by the formula XₙAlR₃₋ₙ, in which X represents chlorine, bromine, iodine or fluorine atoms, Al represents aluminium, R an alkyl radical having from one to fifteen carbon atoms, and n a number having a value of between 1 and 3, and the halogenated compounds other than the halogenated derivatives of aluminium, free of the swelling agent of the support, plus
E) at least one organic derivative of aluminium represented by the formula XₘAl(R')₃₋ₘ in which X represents a halogen atom, Al represents aluminium, R' a hydrogen atom or an alkyl radical having from one to eight carbon atoms, the three substituents R' represented, however, not all being able simultaneously to represent a hydrogen atom, m represents the values 0, 1 and 2, necessarily present when the halogenation agent possibly used is a halogenated compound not containing aluminium and optionally present when the halogenation agent contains aluminium.

16. A method according to Claim 15, characterised in that the magnesium dihalide is magnesium chloride, the swelling agent is tetrahydrofuran, the agent for the elimination of the swelling agent and the halogenation agent are a single compound having the formula XₙAlR₃₋ₙ in which all the terms have the meaning previously indicated.

17. A method according to one of Claims 15 or 16, characterised in that the mixed salt is neodymium tri(ethyl-2-hexanoate) dissolved in toluene in the presence of ethyl-2-hexanoic acid and acetic acid.
